# EUROPÄISCHE PATENTSCHRIFT

(11) **EP 1 812 985 B1**
(45) Veröffentlichungstag und Bekanntmachung des Hinweises auf die Patenterteilung: **23.03.2011**
(21) Anmeldenummer: 05819244.4
(22) Anmeldetag: 09.11.2005
(51) Int. Cl.: H01M 8/10, H01M 4/88, B23K 20/04

(54) **VERFAHREN UND VORRICHTUNG ZUR HERSTELLUNG VON MEMBRAN-ELEKTRODEN-EINHEITEN**
METHOD AND DEVICE FOR PRODUCING MEMBRANE-ELECTRODE UNITS
PROCEDE ET DISPOSITIF POUR FABRIQUER DES UNITES MEMBRANE-ELECTRODE

(30) Priorität: 11.11.2004 DE 102004054503
(43) Veröffentlichungstag der Anmeldung: 01.08.2007
(73) Patentinhaber: Umicore AG & Co. KG, 63457 Hanau-Wolfgang (DE)
(72) Erfinder: ROHLAND, Lutz, 63457 Hanau-Grossauheim (DE)
(74) Vertreter: Starz, Karl Anton
(86) Internationale Anmeldenummer: PCT/EP2005/012005
(87) Internationale Veröffentlichungsnummer: WO 2006/050933

(56) Entgegenhaltungen:
- DE-A1- 10 243 046
- DE-A1- 19 716 263
- US-A- 5 738 905
- US-A- 5 761 793
- US-A1- 2003 145 545
- US-A1- 2003 191 021

## Beschreibung

Die vorliegende Erfindung betrifft das technische Gebiet der Elektrochemie und beschreibt ein Verfahren sowie eine Vorrichtung zur Herstellung von Brennstoffzellenkomponenten, insbesondere zur Herstellung von Membran-Elektroden-Einheiten ("MEE") für Membran-Brennstoffzellen (PEMFC, DMFC) aber auch für andere elektrochemische Vorrichtungen wie Elektrolyseure oder Sensoren.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, ein wasserstoffreiches Gas oder Methanol, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren erhebliche Bedeutung als Alternative für herkömmliche Verbrennungskraftmaschinen. Sie werden aber auch zunehmend für stationäre und portable Anwendungen eingesetzt.

Die Polymer-Elektrolyt-Membran-Brennstoffzelle ("PEM"-Brennstoffzelle) zeichnet sich durch eine kompakte Bauweise, eine hohe Leistungsdichte sowie einen hohen Wirkungsgrad aus. Die Technologie der Brennstoffzellen ist in der Literatur ausführlich beschrieben, siehe zum Beispiel K. Kordesch und G. Simader, "Fuel Cells and their Applications", VCH Verlag Chemie, Weinheim (Deutschland) 1996.

Ein PEM-Brennstoffzellenstapel besteht aus einer stapelweisen Anordnung ("Stack") von einzelnen PEM-Brennstoffzellen, welche wiederum aus Membran-Elektroden-Einheiten ("MEEs") bestehen, zwischen denen sogenannte bipolare Platten zur Gaszufuhr und Stromleitung angeordnet sind. Zur Erzielung einer bestimmten Zellspannung können eine Vielzahl einzelner Membran-Elektroden-Einheiten hintereinandergestapelt werden.

Eine Membran-Elektroden-Einheit, wie sie in der vorliegenden Anmeldung beschrieben wird, besitzt in der Regel fünf Lagen und besteht vorzugsweise aus einer ionenleitenden Membran, die auf beiden Seiten jeweils mit einer Elektrode verbunden ist ("5-lagige MEE"). Jede Elektrode wiederum besteht aus einem Gasverteilersubstrat, auch Gasdiffusionslage, engl. "gas diffusion layer" ("GDLs") genannt, das mit einer Katalysatorschicht versehen ist.

Die Katalysatorschicht auf der Anode ist für die Oxidation von Wasserstoff ausgebildet, die entsprechende Elektrode wird daher als "Anoden-Elektrode" oder kurz als "Anode" bezeichnet.

Die Katalysatorschicht auf der Kathode ist für die Reduktion von Sauerstoff ausgebildet. Die entsprechende Elektrode wird daher als "Kathoden-Elektrode" kurz oder als "Kathode" bezeichnet.

Die Gasverteilersubstrate (GDLs) basieren in der Regel auf Substraten, welche einen guten Zugang der Reaktionsgase zu den Elektroden und eine gute Ableitung des Zellenstroms ermöglichen. Sie können aus porösen, elektrisch leitfähigen Materialien wie Kohlefaserpapier, Kohlefaservlies, Kohlefasergewebe, Metallnetzen, metallisiertem Fasergewebe und ähnlichem bestehen.

Zur gasdichten Abdichtung der MEE beim Einbau in Brennstoffzellenstapel (Stacks) kann diese im Randbereich weiterhin Dichtungsmaterialien, Verstärkungsmaterialien oder gegebenenfalls Schutzfilme enthalten. Damit sind auch höher integrierte MEE-Produkte herstellbar (z.B. "7-lagige MEE").

Zwischen den MEEs sind bipolare Platten angebracht (auch "Separatorplatten" genannt), die in der Regel aus leitfähigem Graphit gefertigt sind und Kanäle für die Gaszufuhr und -ableitung aufweisen.

Anoden- und Kathodenelektroden enthalten Elektrokatalysatoren, die die jeweilige Reaktion (Oxidation von Wasserstoff beziehungsweise Reduktion von Sauerstoff) katalytisch unterstützen. Hierzu kommen in der Regel edelmetallhaltige Katalysatoren zum Einsatz, die fein verteilte Edelmetalle wie beispielsweise Platin, Palladium, Ruthenium, Gold oder Kombinationen davon enthalten. Bevorzugt sind rußgeträgerte Katalysatoren des Typs Pt/C oder PtRu/C, die fein verteiltes Platin bzw. Platin/Ruthenium auf einer leitfähigen Rußoberfläche aufweisen. Typische Edelmetallbeladungen der katalysatorbeschichteten Elektroden liegen für die Anodenseite bei 0,1 bis 0,5 mg Pt/cm², für die Kathodenseite bei 0,2 bis 1 mg Pt/cm². Auf der Anodenseite kommen für den Betrieb mit Reformatgas spezielle PtRu-haltige Katalysatoren zum Einsatz.

Die ionenleitende Membran besteht vorzugsweise aus protonenleitenden Polymermaterialien. Besonders bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion^{®} von E.I. DuPont vertrieben. Es sind jedoch auch andere, insbesondere fluorfreie Ionomermaterialien, wie sulfonierte Polyetherketone, sulfonierte Polyarylketone, dotierte Polybenzimidazole und/oder anorganische Ionomere verwendbar.

In der Literatur werden verschiedene Verfahren zur Herstellung von Komponenten für Brennstoffzellen beschrieben:
Aus der EP 1 365 464 A2 ist ein kontinuierlicher Prozess zur Herstellung von Gasverteilerschichten für PEM-Brennstoffzellen bekannt. Ein Laminierverfahren wird nicht erwähnt.

Die EP 1 037 295 B1 beschreibt ein Verfahren zum Aufbringen von Elektrodenschichten auf eine bandförmige Ionomermembran mittels Siebdruckverfahren.

Aus der EP 868 760 B1 ist ein kontinuierliches Verfahren zur Herstellung von Membran-Elektroden-Verbunden bekannt. Dabei wird die ionenleitende Membran in einer Walzenanordnung mit dem bandförmigen Kontaktiermaterial laminiert und verbunden.

Die WO 03/084748 A2 offenbart ein Verfahren und eine Vorrichtung zur Herstellung von Membran-Elektroden-Einheiten. Die MEEs werden dabei unter Verwendung einer bandförmigen Ionomermembran durch beidseitig Laminierung mit Elektroden (d.h. Gasverteilersubstraten) oder katalysatorbeschichteten Substraten (sog. "decals") hergestellt. Die vorher in einer Stanzeinrichtung auf Maß gestanzten Elektroden bzw. Substrate werden mit Hilfe von Vakuumbändern zur Laminierungsstelle transportiert und dort mit der Polymerelektrolytmembran laminiert. Dieses Verfahren weist die folgenden Nachteile auf:
a) Die verwendeten Vakuumbänder führen zu einer hohen Komplexität der Vorrichtung, was in höheren Kosten, einer komplizierten Mess- und Regeltechnik und verstärkten Wartungsarbeiten endet.
b) Die Zuführung mittels Vakuumbändern impliziert Übergabestellen an die Walzen. Dadurch ist aus geometrischen Gründen die Größe der Elektroden nach unten limitiert, beliebig kleine MEEs können nicht hergestellt werden.
c) Durch die Verwendung von Vakuumbändern ist die Wärmeeinflusszone für die Elektroden bzw. Substrate auf den Bereich des Walzenspaltes limitiert. Durch diese schmale Heizzone kommt es zu einer ungenügenden Wärmeübertragung beim Laminierprozess, insbesondere wenn höhere Produktionsgeschwindigkeiten realisiert werden müssen. Die Anlagenkapazität einer solchen Vorrichtung ist deshalb begrenzt.

Aufgabe der vorliegenden Erfindung ist es daher, ein einfaches, verbessertes Verfahren zur Herstellung von Membran-Elektroden-Einheiten bereitzustellen sowie eine entsprechende verbesserte Vorrichtung vorzuschlagen.

Diese Aufgabe wird durch die Erfindung mit den Merkmalen der unabhängigen Ansprüche gelöst. Vorteilhafte Ausführungsformen der Erfindung sind in den Unteransprüchen gekennzeichnet.

Insbesondere wird die Aufgabe durch ein Verfahren zur Herstellung einer Membran-Elektroden-Einheit gelöst, das folgende Schritte enthält:
- a): Aufbringen der jeweiligen Elektroden auf zwei benachbarte mit Vakuum beaufschlagte Walzenrollen
- b): Zuführen der aufgebrachten Elektroden in den Walzenspalt zwischen den beiden Walzenrollen und
- c): Verpressen der Elektroden mit einer ionenleitenden Membran.
wobei die Elektroden aus Gasverteilersubstraten bestehen, die poröse, elektrisch leitfähige Materialien wie Kohlefaserpapier, Kohlefaservlies, Kohlefasergewebe, Metallnetze, metallisierte Fasergewebe und ähnliches aufweisen und mit einer Katalysatorschicht versehen sind und nach dem Verpressen der jeweiligen Elektroden Blasluft an die Oberfläche der Walzenrollen gebracht wird.

Die Aufgabe wird weiterhin anhand einer Vorrichtung gelöst, die mindestens zwei rotierende Walzenrollen aufweist, wobei die Walzenrollen beheizbare Vakuumwalzen sind und die Walzenrollen mehrere Zonen, insbesondere Vakuumzonen und Blaszonen umfassen, wobei die jeweilige Walzenrolle als Hohlwelle ausgeführt ist und an der Wandung der Hohlwelle axial Verteilerbohrungen eingebracht sind, die mit Vakuum oder Blasluft beaufschlagt werden und von denen radiale Bohrungen zur Walzenoberfläche führen.

Ferner wird die Aufgabe durch ein System zur Herstellung einer Membran-Elektroden-Einheit umfassend eine der erfindungsgemäßen Vorrichtungen gelöst, wobei die Vorrichtung an ein Aufnahme- und Platzierungssystem (Pick-and-Place System) gekoppelt ist.

Die vorliegende Erfindung vermeidet die Nachteile des Standes der Technik, indem sie eine Walzenpresse mit beheizbaren Vakuumwalzen zur Verfügung stellt. Damit wird das zur Fixierung der Elektrodensubstrate benötigte Vakuum in die Walzenpresse integriert. Zusätzliche Baugruppen wie Vakuumbänder entfallen, Verfahren und Vorrichtung werden erheblich vereinfacht. Kosten für Investition und Instandhaltung werden gesenkt, die Wirtschaftlichkeit wird erhöht. Da die Vakuumbänder entfallen, gibt es innerhalb der erfindungsgemäßen Vorrichtung keine Übergabestellen mehr. Die Größe der Elektroden ist damit nicht nach unten limitiert, was insbesondere vor dem Hintergrund von Miniaturisierungsbestrebungen in der Brennstoffzellenindustrie von großem Nutzen ist.

Insbesondere können die Elektroden nach dem Ablegen auf den Vakuumwalzen sehr gut durchgeheizt werden. Die Wärmeeinflusszone ist gegenüber konventionelllen Vorrichtungen erheblich verlängert, aus diesem Grunde lassen sich höhere Arbeitsgeschwindigkeiten und höhere Produktionsraten realisieren. Trotz einfachster Ausführung lassen sich mit dem beschriebenen Verfahren und der zugehörigen Vorrichtung hohe Produktionsgeschwindigkeiten mit Taktzeiten um 0,3 Sekunden erzielen.

Überaschenderweise wurde festgestellt, dass die beschriebene Vorrichtung bis zur Breite ihrer Walzenrollen völlig unabhängig von den Abmessungen der Elektroden sein kann. Die Elektroden können direkt von einer handelsüblichen Pick-and-Place - Einheit auf die Vakuumwalzen positioniert werden. Beispielsweise kann bei Verwendung des erfindungsgemäßen Systems eine aufwendige Ausrichtung der Mechanik entfallen, bei einem Formatwechsel muss nur beispielsweise ein verwendeter Roboter umprogrammiert werden. Da dies beispielsweise auch offline geschehen kann, entstehen keine Rüst- und Stillstandszeiten bei einem Formatwechsel. Auch zusätzliche Werkzeugkosten fallen nicht an.

Die Elektroden können zuvor auf einer handelsüblichen Stanzformen gestanzt werden. Solche Formen sind wesentlich billiger als Stanzformen für eine Rotationsstanze. Zusätzlich können auch Gasverteilersubstrate (GDLs) weiterverarbeitet werden, die kommerziell nur als Blattware verfügbar sind.

Weitere Merkmale und Vorteile der vorliegenden Erfindung werden aus der anschließenden Beschreibung und den beigefügten Ansprüchen in Verbindung mit den angehängten Zeichnungen ersichtlich, wobei die Zeichnungen folgendes darstellen:

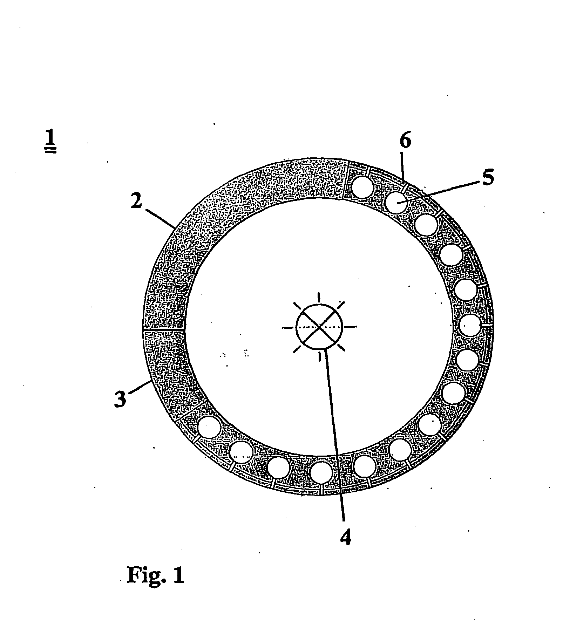

**Figur 1** zeigt die Draufsicht auf die Vorderseite einer Walzenrolle (1) einer Ausführungsform der erfindungsgemäßen Vorrichtung. Die unter Vakuum bzw. Blasluft stehenden Bohrungen sind durch korrespondierende Schieber abgedeckt.

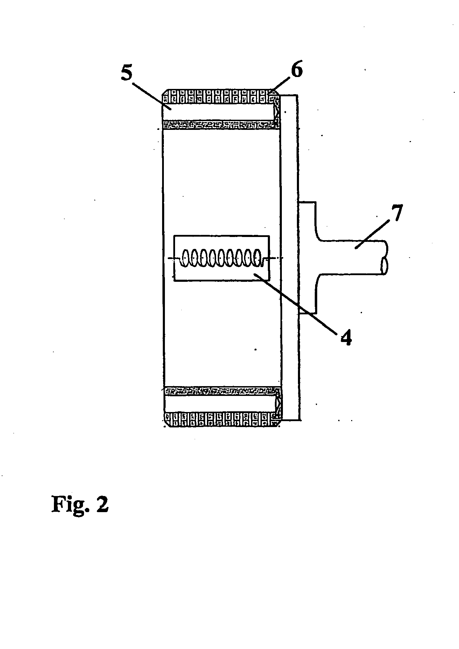

**Figur 2** zeigt einen Axialschnitt einer Ausführungsform der erfindungsgemäßen Vorrichtung;

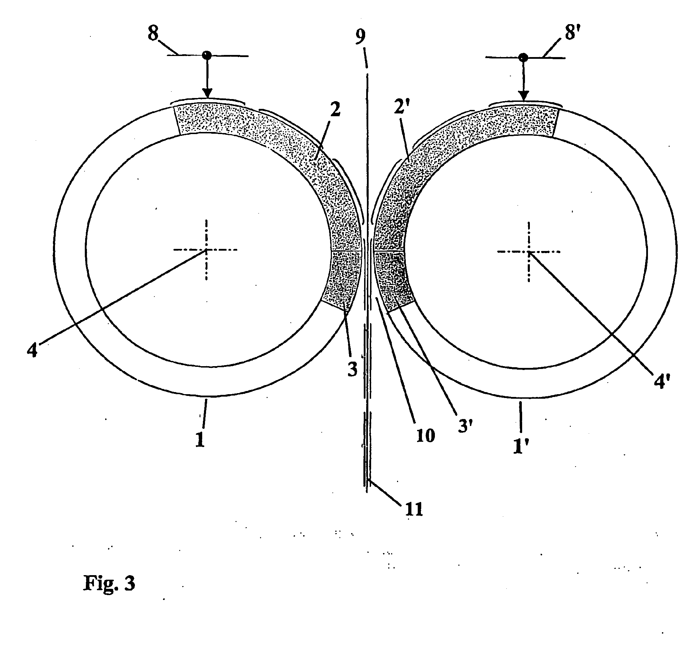

**Figur 3** zeigt einen Querschnitt durch beide Walzenrollen (1, 1') einer Ausführungsform der erfindungsgemäßen Vorrichtung während der Produktion von Membran-Elektroden-Einheiten.

Die erfindungsgemäße Vorrichtung besteht aus mindestens zwei rotierenden Walzenrollen (1, 1') die vorzugsweise synchronisiert und gegenläufig zueinander rotieren. Die Walzenrollen können fliegend gelagert sein und auf der Lagerseite angetrieben werden, vgl. Antriebswelle (7). Die Walzenrollen (1, 1') weisen Vakuumzonen (2, 2') sowie Blaszonen (3,3') auf. Die Walzenrollen sind als Hohlwelle ausgeführt, welche von innen beispielsweise mittels eines geregelten Infrarotstrahlers (4) auf die gewünschte Oberflächentemperatur geheizt werden können. In einer weiteren Ausführungsform ist es aber auch möglich, die Heizung als elektrischen Flächenheizkörper auszuführen, der auf die innere Oberfläche der Hohlwelle zum Beispiel mit einem Klemmring aufgebracht wird. Typische O-berflächentemperaturen der Walzenrollen liegen im Bereich von 130 bis 220 °C, vorzugsweise im Bereich von 150 bis 190 °C

In der Wandung der Hohlwelle sind axial Verteilerbohrungen (5) eingebracht, die über auf der Frontseite (die nicht gelagerte Seite) befindliche Schieber in beliebigen Segmenten mit Vakuum oder Blasluft beaufschlagt werden. Von den Verteilerbohrungen gehen radiale Bohrungen (6) zur Walzenoberfläche, durch deren Saugwirkung die auf der Oberfläche der jeweiligen Walzenrolle abgelegten Elektroden positionsgenau fixiert werden können. In einer besonders bevorzugten Ausführung sind die Walzenrollen zusätzlich mit einem flexiblen Bezug, wie beispielsweise mit Silikongummi versehen, welcher die Breite der Druckeinflusszone vergrößert und den Druckgradienten mindert.

Eine der beiden Walzenrollen ist vorzugsweise als Festwalze ausgebildet. Festwalze im Sinne der Erfindung bedeutet, dass die Festwalze die primär angetriebene Walze ist und nur eine rotatorische Bewegung um ihre Achse ausführen kann. Für den Antrieb können beispielsweise Elektromotoren, besonders Servo- oder Gleichstrommotoren verwendet werden. Die zweite Walze ist vorzugsweise als Loswalze ausgebildet, die auf geeigneten Linearführungen quer zur Walzenachse verschiebbar angeordnet werden kann. Es ist auch möglich, die Loswalze auf einem Kreisbogen pendelnd anzuordnen. Zur Ausübung der Walzkraft kann die Loswalze angestellt werden. Dies kann in einer besonders bevorzugten Ausführungsform der vorliegenden Erfindung mittels eines Pneumatikzylinders geschehen, in anderen Ausführungsformen kann die Anstellung jedoch auch beispielsweise mit einem Hydrauliksystem oder über Motor und Spindel erfolgen. Antrieb und Synchronisation der Loswalze können über einen Zahnriemen erfolgen, welcher über eine Spannvorrichtung verfügen kann, oder über ein funktional gleichwertiges Maschinenelement. Die Umfangsgeschwindigkeit der Walzenrollen (1, 1') liegt typischerweise im Bereich von 50 bis 500 m/h, vorzugsweise im Bereich von 100 bis 300 m/h.

Die Anstellung mittels einstellbarer Kraft kann durch einen Weganschlag begrenzt werden, der ebenfalls variabel ist und nach den Erfordernissen des jeweiligen Produktes eingestellt werden kann. Hierzu kann an der Linearführung eine genaue, elektronische Wegmessung angebracht werden. Es ist aber auch möglich, die Einstellung beispielsweise über eine Mikrometerschraube vorzunehmen.

Alle für den Betrieb der Vorrichtung benötigten Hilfsaggregate sind vorzugsweise auf der Lagerseite der Walzenrollen angeordnet. Hierzu zählen beispielsweise Antriebsmotor, Vakuumstation, elektrische Einrichtungen, Synchronisation des Antriebes und Anstellung der Loswalze. Diese Anordnung weist den Vorzug auf, dass die Frontseite der Walzenrollen frei zugänglich ist, beispielsweise für das Pick-and-Place - System. Damit können beispielsweise geringst mögliche Verfahrwege und Taktzeiten für den oder die Roboter erreicht werden. Insbesondere ist es ohne weiteres möglich, beide Walzenrollen bis hin zu mittleren Produktionsgeschwindigkeiten mit einem einzelnen Roboter zu bestücken, wodurch die Wirtschaftlichkeit der Vorrichtung nochmals erhöht wird.

Die Elektroden liegen vorzugsweise auf Maß gestanzt in einem Magazin vor, sie können jedoch auch von der Stanzunterlage gegriffen werden. Beispielsweise kann mittels eines geeigneten Greifers, wie ein Nadelgreifer, Vakuumgreifer oder Vereisungsgreifer, ein entsprechend programmierter Roboter (Prinzip Linearsystem oder Scara) die Elektrode aufnehmen und diese positionsgenau auf der ersten Walzenrolle abgelegt werden.

Um hohe Genauigkeiten zu erzielen, kann die Position der Elektrode am Greifer während der Verfahrbewegung von einem Bildverarbeitungssystem analysiert und der Roboter entsprechend dem Sollwert nachgeführt werden. Nach dem positionsgenauen Ablegen der ersten Elektrode kann der Roboter die zweite Elektrode (ggf. aus einem zweiten Magazin) greifen und sie auf der zweiten Walzenrolle positionieren.

In einer weiteren Ausführungsform können hierzu auch zwei Roboter zur Anwendung kommen. Dabei können die beiden Elektroden exakt zeitgleich von zwei mit Greifern bestückten Robotern auf den Scheitelpunkten der ersten und zweiten Walzenrolle abgelegt werden. Dem höheren baulichen Aufwand steht dann der Vorteil gegenüber, dass die beiden Elektroden zeitsynchron auf den Scheitelpunkten der beiden Walzenrollen abgelegt werden können. Hingegen muss bei Verwendung eines einzelnen Roboters entweder die Walzenpresse für die Dauer des Pick-and-Place - Prozesses (ca. 0,5 sec.) angehalten werden oder aber die Ablageposition der zweiten Elektrode um den seit dem Ablegen der ersten Elektrode von einem Punkt auf der Oberfläche der Walzenrolle zurückgelegten Weg rechnerisch korrigiert werden. Bis zu mittleren Produktionsgeschwindigkeiten (je nach Formatgröße ca. 2500 Stck./h) kann der Kostenfaktor (ein Roboter) überwiegen, bei hohen Produktionsgeschwindigkeiten kann der Nutzenfaktor überwiegen (zwei Roboter).

Die auf den Walzenrollen (1, 1') positionsgenau abgelegten Elektroden werden durch das an den Walzenrollen anliegende Vakuum gehalten und durch die Rotationsbewegung dem Walzenspalt zugeführt. Die erste Walzenrolle ist vorzugsweise im Bereich von ungefähr 340° - 90° mit Vakuum, die zweite Walzenrolle ist vorzugsweise im Bereich von ungefähr 270° - 20° mit Vakuum beaufschlagt.

Das verwendete Vakuum liegt typischerweise bei 50 bis 300 mbar Unterdruck und kann zum Beispiel durch eine Venturidüse oder ein Seitenkanalgebläse erzeugt werden. Wird ein Seitenkanalgebläse verwendet, so findet keine Verunreinigung der Luft mit Öl oder Wasser statt und das Abgas des Gebläses kann besonders vorteilhaft in der nächsten Zone als Blasluft verwendet werden.

Der Walzenspalt kann durch einen verstellbaren Anschlag an der Loswalze gebildet werden. Die Einstellung kann je nach den Erfordernissen des Produktes vorgenommen werden. Die Breite des Walzenspaltes ist vorzugsweise größer als die Dicke des Produktes, wie sie im eingebauten Zustand unter Betriebsbedingungen im Stack erzielt werden soll. Die Begrenzung des Walzenspaltes vermeidet eine unzulässig hohe Kompression der Gasverteilerschichten bzw. Elektroden, die die Funktion beeinträchtigen könnte und stellt gleichzeitig sicher, dass die ionenleitende Membran, die als Bahnware zwischen den Walzenrollen im Walzenspalt synchron zur Umfangsgeschwindigkeit der Walzenrollen laufen kann, außerhalb der durch die Elektroden kontaktierten Fläche nicht belastet oder beschädigt wird. Die beim Verpressen/Laminieren wirksame Linienlast liegt im Bereich von 50 bis 300 N/cm Breite der aktiven Fläche, bevorzugt im Bereich von 80 bis 200 N/cm.

Der Walzendruck wird bevorzugt durch einen oder mehrere Pneumatikzylinder auf die Loswalze aufgebracht. Der Walzendruck kann auch durch ein Hydrauliksystem oder mittels einer Kombination aus elektrischem Antrieb und Spindel ausgeübt werden.

Im Walzenspalt werden die durch Vakuum auf den Walzen fixierten, aufgeheizten Elektroden mit der als Bahnware mittig durch den Walzenspalt laufenden Membran kontaktiert und unter dem Einfluss von Temperatur und Druck verbunden. An dieser Stelle endet die Vakuumzone und auf den folgenden 20° des Umfanges wird Blasluft eingeleitet, die den hergestellten Verbund von den Oberflächen der ersten und zweiten Walzenrolle entfernt. In besonderen Fällen ist es auch möglich, jeweils eine zusätzliche Trennfolie synchron mit der korrespondierenden Walzenrolle umlaufen zu lassen, um die Haftkräfte insbesondere der Membran an der Beschichtung der Walzenrolle weiter zu minimieren.

Nach einem Durchlauf durch die Walzenpresse steht der fertige Verbund zur weiteren Verarbeitung zur Verfügung. Je nach Ausführung der nachfolgenden Prozessschritte können die auf der Membranbahn befindlichen MEE's entweder vereinzelt oder als Bahnware der weiteren Verarbeitung zugeführt werden. Die Vereinzelung der MEEs kann diskontinuierlich oder kontinuierlich durch Stanzwerkzeuge, Rotationsstanzen, Stanzmesser, Perforationswalzen oder Schlagscheren erfolgen.

### BEISPIEL

Im vorliegenden Beispiel wird eine Maschine benutzt, die den Ausführungen der vorhergehenden Kapitel entspricht und einen Walzenballendurchmesser von 300 mm aufweist. Zur Vorbereitung des Produktionslaufes wird eine Rolle der Ionomermembran (aufgebracht auf Trägerfolie, mit einem Schutzfilm abgedeckt; Nafion^{®} NR112, Fa. DuPont; USA), in die Maschine eingehängt und ausgerichtet. Die Vorrichtung verfügt über eine Einrichtung zum Delaminieren sowohl der Trägerfolie als auch des Schutzfilmes der Membran, so dass besagte Membran frei in den Walzenspalt einläuft.

Ferner werden die auf Endmaß gestanzten Anoden- und Kathoden-Elektroden (auch CCB's - "Catalyst Coated Backings" genannt) in ihre jeweiligen Magazine eingelegt. Die Elektroden bestehen jeweils aus einem Gasverteilersubstrat (GDL) vom Typ SGL Sigracet 30 BC (Fa. SGL, Meitingen, DE), das mit einem Anoden- bzw. Kathodenkatalysator beschichtet ist. Als Katalysator verwendet man rußgeträgertes Platin in einer Formulierung, die 60 Gew.% Platin enthält. Die geeigneten Beschichtungsprozesse sind dem Fachmann bekannt.

Es werden Anoden- und Kathoden-Elektroden (CCBs) verwendet, die äußere Abmessungen von 71 x 71 mm aufweisen. Für die im Beispiel genannten Materialien wird der Anschlag der Loswalze auf einen Abstand der Walzenoberflächen von 600 µm eingestellt und eine Anstellkraft von 850 N gewählt. Die Walzen lässt man mit einer Umfangsgeschwindigkeit von 160 m/h laufen, die Oberflächentemperatur beträgt 170 °C. Die beschichteten CCBs werden in Magazinen bevorratet, aus denen sie mit einem Greifer entnommen werden. Der Greifer ist an einem Scara-Roboter montiert.

Die Umfangsgeschwindigkeit der Walzen beträgt im vorliegenden Beispiel 44,5 mm/sec (= 160,2 m/h). Die erste Elektrode wird vom Roboter auf dem Scheitelpunkt der ersten Walzenrolle abgelegt. Die zweite Elektrode wird von demselben Roboter eine Sekunde später dergestalt auf der zweiten Walzenrolle abgelegt, dass die der Drehachse der Walze parallele Mittelinie der zweiten Elektrode um 44,5 mm näher an der gedachten Berührungslinie der Walzenrollen liegt als der Scheitelpunkt der zweiten Walze, wodurch das Vorrücken der ersten Elektrode auf der ersten Walzenrolle ausgeglichen wird. Die Elektroden werden am Ablagepunkt sofort vom Unterdruck der Walzenrollen fixiert und durch den Greifer freigegeben. Durch die Drehbewegung der Walzenrollen werden die Elektroden positionsgenau dem Walzenspalt zugeführt. Der Arbeitstakt wiederholt sich dergestalt, dass immer derjenige Abstand zwischen den Elektroden auf der Walzenoberfläche vorliegt, der mindestens dem Doppelten des für das Endprodukt vorgesehenen Membranrandes entspricht.

Im Walzenspalt werden die durch Unterdruck auf den Walzenrollen fixierten Elektroden mittels Druck und Temperatur passgenau auf die zwischen ihnen durch den Walzenspalt geführte Membran auflaminiert. Diejenigen Kammern der Walzenrollen, die den Walzenspalt passiert haben, werden auf einem Umfangswinkel von ca. 20° mit Blasluft beaufschlagt, so dass sich die mit Elektroden versehene Membranbahn leicht von beiden Walzenrollen löst und frei aus der Maschine ausläuft. Durch Zug auf die Membranbahn lassen sich die Laminate leicht der weiteren Verarbeitung, z. B. einem Stanzschritt, zuführen. Im vorliegenden Beispiel hat das Endprodukt einen äußeren Membranrand von 100 x 100 mm². Stündlich werden demnach 1600 Laminate erhalten.

### Bezugszeichenliste

- 1/1': Walzenrolle
- 2/2': Vakuumzone
- 3/3': Blaszone
- 4/4': Wärmequelle
- 5: axiale Verteilerbohrung
- 6: radiale Bohrung
- 7: Antriebswelle
- 8/8': Elektroden (katalysatorbeschichtete Anode bzw. Kathode)
- 9: ionenleitende Membran
- 10: Walzenspalt
- 11: Membran-Elektroden-Einheit

## Patentansprüche

1. Verfahren zur Herstellung einer fünflagigen Membran-Elektroden-Einheit für Membran-Brennstoffzellen, umfassend eine Anoden-Elektrode (8), eine Kathoden-Elektrode (8') sowie eine dazwischen angeordnete ionenleitende Membran (9), enthaltend die folgende Schritte:
a) Aufbringen der Elektroden (8, 8') auf zwei benachbarte beheizte, mit Vakuum beaufschlagte Walzenrollen (1, 1'),
b) Zuführen der aufgebrachten Elektroden (8, 8') in den Walzenspalt (1.0) zwischen den beiden Walzenrollen (1, 1'), und
c) Verpressen der Elektroden (8, 8') mit der ionenleitenden Membran (9),
wobei die Elektroden (8, 8') aus Gasverteilersubstraten bestehen, die poröse, elektrisch leitfähige Materialien wie Kohlefaserpapier, Kohlefaservlies, Kohlefasergewebe, Metallnetze, metallisierte Fasergewebe und ähnliches aufweisen und mit einer Katalysatorschicht versehen sind und nach dem Verpressen der jeweiligen Elektroden Blasluft an die Oberfläche der Walzenrollen (1, 1') gebracht wird.

2. Verfahren nach Anspruch 1, weiterhin enthaltend Schritte zur Vereinzelung der Membran-Elektroden-Einheiten.

3. Verfahren nach Anspruch 1, wobei das an den beiden Walzenrollen (1, 1) anliegende Vakuum im Bereich von 50 bis 300 mbar liegt.

4. Verfahren nach Anspruch 1, wobei die ionenleitende Membran (9) organische Ionomere, wie fluorierte polymere Sulfonsäurederivate, sulfonierte Polyetherketone, sulfonierte Polyarylketone, dotierte Polysulfone, dotierte Polybenzimidazole und/oder anorganische Ionomere enthält.

5. Verfahren nach Anspruch 1, wobei die Elektroden (8, 8') vorgestanzt sind.

6. Verfahren nach Anspruch 1, wobei die Elektroden (8, 8') mit Hilfe von mindestens einem Roboter auf die Walzenrollen (1,1') aufgebracht werden.

7. Verfahren nach Anspruch 6, wobei die Position der Elektroden (8, 8') am Greifer während der Verfahrbewegung von einem Bildverarbeitungssystem analysiert und der Roboter entsprechend dem Sollwert nachgeführt wird.

8. Verfahren nach Anspruch 1, wobei die Elektroden (8, 8') zeitsynchron auf den Walzenrollen (1, 1) abgelegt werden.

9. Verfahren nach Anspruch 1, wobei die Elektroden (8, 8') zeitverzögert auf den Walzenrollen (1, 1') abgelegt werden.

10. Verfahren nach Anspruch 1, wobei das Verpressen der Elektroden (8, 8') mit der ionenleitenden Membran (9) bei einer Linienlast im Bereich von 50 bis 300 N/cm vorzugsweise im Bereich von 80 bis 200 N/cm erfolgt.

11. Verfahren nach Anspruch 1, wobei das Verpressen der Elektroden (8, 8') mit der ionenleitenden Membran (9) bei einer Oberflächentemperatur der Walzenrollen im Bereich von 130 bis 220 °C, vorzugsweise im Bereich von 150 und 190 °C erfolgt.

12. Verfahren nach Anspruch 1, wobei die Umfangsgeschwindigkeit der Walzenrollen (1, 1') im Bereich von 50 bis 500 m/h, vorzugsweise im Bereich von 100 bis 300 m/h liegt.

13. Verfahren nach Anspruch 1, wobei die Membran-Elektroden-Einheit höher integriert ist und gegebenenfalls Dichtungsmaterialien, Verstärkungsmaterialien oder Schutzfilme enthält.

14. Verfahren nach Anspruch 2, wobei die Vereinzelung durch Stanzwerkzeuge, Rotationsstanzen, Stanzmesser, Perforationswalzen oder Schlagscheren erfolgt.

15. Vorrichtung zur Herstellung einer Membran-Elektroden-Einheit für Membran-Brennstoffzellen, umfassend eine Walzenpresse mit mindestens zwei rotierenden Walzenrollen (1, 1'), wobei die Walzenrollen beheizbare Vakuumwalzen sind und die Walzenrollen (1, 1') mehrere Zonen, insbesondere Vakuumzonen (2, 2') und Blaszonen (3, 3') umfassen,
wobei die jeweilige Walzenrolle als Hohlwelle ausgeführt ist und an der Wandung der Hohlwelle axial Verteilerbohrungen (5) eingebracht sind, die mit Vakuum oder Blasluft beaufschlagt werden und von denen radiale Bohrungen (6) zur Walzenoberfläche führen.

16. Vorrichtung nach Anspruch 15, wobei die Vorrichtung mindestens zwei Wärmequellen (4, 4') zum Beheizen der Walzenrollen (1, 1') umfasst.

17. Vorrichtung nach Anspruch 15, wobei die Wärmequellen (4, 4') Infrarotstrahler sind.

18. Vorrichtung nach Anspruch 15, wobei die Wärmequellen (4, 4') innen auf den Walzenring aufgebrachte, elektrische Flächenheizkörper sind.

19. Vorrichtung nach Anspruch 15, wobei die Walzenrollen (1, 1') zusätzlich mit einem flexiblen Bezug, beispielsweise Silikongummi, versehen sind.

20. Vorrichtung nach Anspruch 15, wobei eine Walzenrolle eine Festwalze ist und eine Antriebswelle umfasst.

21. Vorrichtung nach Anspruch 15, wobei eine Walzenrolle eine Loswalze ist und die Loswalze auf Linearführungen quer zur Walzenachse verschiebbar angeordnet ist.

22. Vorrichtung nach Anspruch 15, wobei eine Walzenrolle eine Loswalze ist und die Loswalze pendelnd auf einem Kreisbogen quer zur Walzenachse geführt ist.

23. System zur Herstellung einer Membran-Elektroden-Einheit für Membran-Brennstoffzellen, wobei die Vorrichtung gemäß Anspruch 15 an ein Aufnahme- und Platzierungs-System (pick-and place-system) gekoppelt ist.

24. System zur Herstellung einer Membran-Elektroden-Einheit für Membran-Brennstoffzellen, wobei die Vorrichtung gemäß Anspruch 15 an ein Bildverarbeitungssystem gekoppelt ist.

## Claims

1. Method for producing a five-layered membrane-electrode unit for membrane fuel cells, comprising an anode electrode (8), a cathode electrode (8') and an ion-conducting membrane (9) arranged in between, comprising the following steps:
a) Applying the electrodes (8, 8') to two neighbouring heated rolling rollers (1, 1') that are subjected to a vacuum,
b) Feeding the applied electrodes (8, 8') into the roller nip (10) between the two rolling rollers (1, 1'), and
c) Pressing the electrodes (8, 8') with the ion-conducting membrane (9),
the electrodes (8, 8') consisting of gas diffusion substrates which comprise porous, electrically conductive materials, such as carbon fibre paper, carbon fibre nonwovens, woven carbon fibre fabrics, metal meshes, metallized fibre fabrics and the like and are provided with a catalyst layer, and the pressing of the respective electrodes being followed by blowing air being brought onto the surface of the rolling rollers (1, 1').

2. Method according to Claim 1, further comprising steps for individually separating the membrane-electrode units.

3. Method according to Claim 1, the vacuum applied to the two rolling rollers (1, 1') lying in the range from 50 to 300 mbar.

4. Method according to Claim 1, the ion-conducting membrane (9) containing organic ionomers, such as fluorinated polymeric sulphonic acid derivatives, sulphonated polyether ketones, sulphonated polyaryl ketones, doped polysulphones, doped polybenzimidazoles and/or inorganic ionomers.

5. Method according to Claim 1, the electrodes (8, 8') being diecut in advance.

6. Method according to Claim 1, the electrodes (8, 8') being applied to the rolling rollers (1, 1') with the aid of at least one robot.

7. Method according to Claim 6, the position of the electrodes (8, 8') on the gripper being analysed during the travelling movement by an image processing system and the robot corrected to correspond to the setpoint value.

8. Method according to Claim 1, the electrodes (8, 8') being placed on the rolling rollers (1, 1') at synchronized times.

9. Method according to Claim 1, the electrodes (8, 8') being placed on the rolling rollers (1, 1') at times separated by a delay.

10. Method according to Claim 1, the pressing of the electrodes (8, 8') with the ion-conducting membrane (9) taking place with a linear load in the range from 50 to 300 N/cm, preferably in the range from 80 to 200 N/cm.

11. Method according to Claim 1, the pressing of the electrodes (8, 8') with the ion-conducting membrane (9) taking place with a surface temperature of the rolling rollers in the range from 130 to 220°C, preferably in the range from 150 to 190°C.

12. Method according to Claim 1, the circumferential speed of the rolling rollers (1, 1') lying in the range from 50 to 500 m/h, preferably in the range from 100 to 300 m/h.

13. Method according to Claim 1, the membrane-electrode unit being more highly integrated and optionally contains sealing materials, reinforcing materials or protective films.

14. Method according to Claim 2, the individual separation taking place by diecutting dies, rotary diecutting dies, diecutting cutters, perforation rollers or guillotine shears.

15. Apparatus for producing a membrane-electrode unit for membrane fuel cells, comprising a rolling press with at least two rotating rolling rollers (1, 1'), the rolling rollers being heatable vacuum rollers and the rolling rollers (1, 1') comprising a number of zones, in particular vacuum zones (2, 2') and blowing zones (3, 3'), the respective rolling roller being configured as a hollow shaft and the wall of the hollow shaft being provided with axial distribution bores (5), which are subjected to a vacuum or blowing air and from which radial bores (6) lead to the roller surface.

16. Apparatus according to Claim 15, the apparatus comprising at least two heat sources (4, 4') for heating the rolling rollers (1, 1').

17. Apparatus according to Claim 15, the heat sources (4, 4') being infrared radiators.

18. Apparatus according to Claim 15, the heat sources (4, 4') being electrical radiant panels, applied to the inside of the roller ring.

19. Apparatus according to Claim 15, the rolling rollers (1, 1') being additionally provided with a flexible covering, for example silicone rubber.

20. Apparatus according to Claim 15, one rolling roller being a fixed roller and comprising a drive shaft.

21. Apparatus according to Claim 15, one rolling roller being an idler roller and the idler roller being mounted such that it is displaceable transversely to the roller axis on linear guides.

22. Apparatus according to Claim 15, one rolling roller being an idler roller and the idler roller being guided such that it oscillates on an arc of a circle transversely to the roller axis.

23. System for producing a membrane-electrode unit for membrane fuel cells, the apparatus according to Claim 15 being coupled to a pick-and-place system.

24. System for producing a membrane-electrode unit for membrane fuel cells, the apparatus according to Claim 15 being coupled to an image processing system.

## Revendications

1. Procédé de fabrication d'une unité d'électrodes à membrane en cinq couches pour cellule à combustible à membrane, comportant une électrode d'anode (8), une électrode de cathode (8') ainsi qu'une membrane conductrice d'ions (9) disposée entre elles, le procédé comportant les étapes suivantes :
a) appliquer les électrodes (8, 8') sur deux cylindres (1, 1') voisins, chauffés et mis en dépression,
b) apporter les électrodes (8, 8') appliquées dans l'interstice (10) présent entre les deux cylindres (1, 1') et
c) repousser les électrodes (8, 8') contre la membrane (9) conductrice d'ions,
les électrodes (8, 8') étant constituées de substrats répartiteurs de gaz qui présentent des matériaux électriquement conducteurs et poreux, par exemple un papier de fibres de carbone, un feutre de fibres de carbone, un tissu de fibres de carbone, un treillis métallique, un treillis de fibres métallisées et similaires, étant dotées d'une couche de catalyseur, de l'air étant soufflé sur la surface des cylindres (1, 1') après la compression de l'électrode concernée.

2. Procédé selon la revendication 1, contenant en outre l'étape qui consiste à découper une à une les unités d'électrodes de membrane.

3. Procédé selon la revendication 1, dans lequel la dépression appliquée sur les deux cylindres (1, 1') est comprise dans la plage de 50 à 300 mbars.

4. Procédé selon la revendication 1, dans lequel la membrane (9) conductrice d'ions contient des ionomères organiques, par exemple des dérivés polymères fluorés d'acide sulfonique, des polyéthercétones sulfonées, des polyarylcétones sulfonées, des polysulfones dopés, des polybenzimidazoles dopés et/ou des ionomères minéraux.

5. Procédé selon la revendication 1, dans lequel les électrodes (8, 8') sont préalablement estampées.

6. Procédé selon la revendication 1, dans lequel les électrodes (8, 8') sont appliquées sur les cylindres (1, 1') au moyen d'au moins un robot.

7. Procédé selon la revendication 6, dans lequel la position des électrodes (8, 8') en déplacement sur le dispositif de saisie est analysée au moyen d'un système de traitement d'image et le robot est guidé en fonction de la valeur de consigne.

8. Procédé selon la revendication 1, dans lequel les électrodes (8, 8') sont déposées de manière synchronisée sur les cylindres (1, 1').

9. Procédé selon la revendication 1, dans lequel les électrodes (8, 8') sont déposées de manière ralentie sur les cylindres (1, 1').

10. Procédé selon la revendication 1, dans lequel la compression des électrodes (8, 8') contre la membrane (9) conductrice d'ions s'effectue à une charge linéaire comprise dans la plage de 50 à 300 N/cm et de préférence dans la plage de 80 à 200 N/cm.

11. Procédé selon la revendication 1, dans lequel la compression des électrodes (8, 8') contre la membrane (9) conductrice d'ions s'effectue à une température de surface des cylindres comprise dans la plage de 130 à 220°C et de préférence dans la plage de 150 à 190°C.

12. Procédé selon la revendication 1, dans lequel la vitesse périphérique des cylindres (1, 1') est comprise dans la plage de 50 à 500 m/h et de préférence dans la plage de 100 à 300 m/h.

13. Procédé selon la revendication 1, dans lequel l'unité d'électrodes de membrane est fortement intégrée et contient éventuellement des matériaux d'étanchéité, des matériaux de renfort ou des films de protection.

14. Procédé selon la revendication 2, dans lequel la découpe s'effectue par des outils d'estampage, des couteaux rotatifs, des couteaux d'estampage, des cylindres à perforation ou des cisailles à percussion.

15. Dispositif de fabrication d'une unité d'électrodes et de membrane pour cellules à combustible à membrane, comprenant une presse à cylindre qui présente au moins deux cylindres rotatifs (1, 1'), les cylindres étant des cylindres chauffés et mis en dépression, les cylindres (1, 1') comportant plusieurs zones, en particulier des zones en dépression (2, 2') et des zones de soufflage (3, 3'),
les différents cylindres étant réalisés sous la forme d'arbres creux et des alésages de répartition (5) étant ménagés dans la paroi de l'arbre creux, une dépression y étant appliquée ou de l'air y étant soufflé, des alésages radiaux (6) conduisant vers la surface du cylindre.

16. Dispositif selon la revendication 15, le dispositif comportant au moins deux sources de chaleur (4, 4') qui chauffent les cylindres (1, 1').

17. Dispositif selon la revendication 15, dans lequel les sources de chaleur (4, 4') sont des radiants à infrarouge.

18. Dispositif selon la revendication 15, dans lequel les sources de chaleur (4, 4') sont des corps chauffants électriques plats appliqués par l'intérieur sur l'anneau cylindrique.

19. Dispositif selon la revendication 15, dans lequel les cylindres (1, 1') sont de plus dotés d'un revêtement flexible, par exemple en caoutchouc au silicone.

20. Dispositif selon la revendication 15, dans lequel un cylindre est un cylindre fixe et présente un arbre d'entraînement.

21. Dispositif selon la revendication 15, dans lequel un cylindre est un cylindre à rotation libre, le cylindre à rotation libre étant disposé de manière à pouvoir coulisser transversalement par rapport à l'axe du cylindre sur des guides linéaires.

22. Dispositif selon la revendication 15, dans lequel un cylindre est un cylindre à rotation libre, le cylindre à rotation libre étant guidé transversalement par rapport à l'axe du cylindre de manière pendulaire sur un arc de cercle.

23. Système de fabrication d'une unité d'électrodes et de membrane pour cellules à combustible à membrane, le dispositif selon la revendication 15 étant couplé à un système de prélèvement et de positionnement (système dit "pick-and-place").

24. Système de fabrication d'une unité d'électrodes et de membrane pour cellules à combustible à membrane, le dispositif selon la revendication 15 étant couplé à un système de traitement d'image.
